# EUROPEAN PATENT SPECIFICATION

(11) **EP 1 893 889 B1**
(45) Date of publication and mention of the grant of the patent: **05.03.2014**
(21) Application number: 05752877.0
(22) Date of filing: 13.06.2005
(51) Int. Cl.: F16G 5/16

(54) **DRIVE BELT FOR A CONTINUOUSLY VARIABLE TRANSMISSION AND METHOD OF MANUFACTURING A TRANSVERSE ELEMENT FOR SUCH A DRIVE BELT**
ANTRIEBSRIEMEN FÜR EIN STUFENLOSES GETRIEBE UND VERFAHREN ZUR HERSTELLUNG EINES QUERELEMENTS FÜR SOLCH EINEN ANTRIEBSRIEMEN
COURROIE DE TRANSMISSION POUR TRANSMISSION À VARIATION CONTINUE ET PROCÉDÉ DE FABRICATION D ÉLÉMENT TRANSVERSAL POUR LADITE COURROIE DE TRANSMISSION

(43) Date of publication of application: 05.03.2008
(73) Proprietor: ROBERT BOSCH GMBH, 70442 Stuttgart (DE)
(72) Inventor: VAN DROGEN, Mark, NL-5021 EJ Tilburg (NL); FAES, Paulus, Adrianus, Josephus, Maria, NL-5045 ZH Tilburg (NL); BRANDSMA, Arjen, NL-5045 WN Tilburg (NL)
(74) Representative: Plevier, Gabriel Anton Johan Maria
(86) International application number: PCT/NL2005/000430
(87) International publication number: WO 2006/135225

(56) References cited:
- EP-A- 0 962 679
- EP-A- 1 069 342
- EP-A- 1 158 204
- EP-A- 1 199 494
- WO-A-03/069185
- WO-A-2004/111490

## Description

The invention is related to a drive belt according to the preamble of claim 1. Such a drive belt is generally known, more in particular from the European patent application no. 0.994.275, and is often referred to as the Van Doorne belt or push belt. The known drive belt comprises at least one endless tensile means and a multitude of plate-like transverse elements placed one after the other on the tensile means forming a more or less continuous string. The elements are supported and guided by the tensile means, but at the same time they are freely moveable along its circumference. Such a drive belt is most commonly used in continuously variable transmissions or CVTs for motor vehicles, where it is wrapped around and in frictional contact with two pulleys for transmitting torque there between at a continuously variable transmission ratio, which transmission is also generally known, for example from WO-A-2003/021134.

The mechanical efficiency of such a transmission is determined by a multitude of factors, whereof one is the coefficient of friction or "CoF" that prevails in the lubricated frictional contact between the belt and the respective pulleys. Hereby, increasing the CoF is generally considered desirable, since a normal force that is to be exerted by discs of the pulleys onto the drive belt to transmit a tangentially oriented friction force during operation of the transmission may be reduced as a consequence thereof. Such a relatively small normal force may normally be generated more economically. A further advantageous effect of a relatively small normal force is that the drive belt and in particular the tensile means thereof is loaded favourable less during operation, thereby increasing the operational life of the transmission.

The present invention is related to and aims for further improving the transmission efficiency by optimising the CoF in a previously unknown manner. According to the invention such aim is realised by applying the drive belt in accordance with claim 1 in the otherwise known transmission.

By applying the presently claimed measure the CoF prevailing in the lubricated frictional contact between the transverse elements of the belt and a pulley disc was found to be significantly, i.e. up to 10%, higher than the CoF that is measured for the conventional drive belt under typical operational circumstances. It is believed that as a consequence of the claimed measure, the amount of lubrication fluid that is present in the said frictional contact during operation of the transmission may be significantly reduced, i.e. only a very thin layer of lubrication fluid will be build up between the elements and the pulley discs, even at a considerable relative speed there between, and so-called boundary lubrication conditions will predominantly prevail as a consequence.

Hereby, the effective radius of curvature of the transition surface, i.e. the radius of a circular arc that most closely fits the actual transition surface, is considered a convenient way to quantify the said amount of lubrication fluid. Still, it is normally only a small part of the transition surface that actually influences the said amount of lubrication fluid, namely the part immediately adjacent to the side face that is immersed in the layer of lubrication fluid during operation of the transmission. Thus, in case the overall cross-sectional shape of the transition surface deviates significantly from an arc shape, the said effective radius of curvature should be determined in relation to such small part of the transition surface only.

According to the invention, the said further surface could of course be represented by one of the main faces of the transverse element, or could be formed by one of the side walls of a radially oriented groove or slit in the side faces. In particular with this latter design very good experimental results were obtained in terms of the relative increase in CoF that could be realised therewith, which is probably related to the fact that in such latter design the said effective radius of curvature will approach the most effective and smallest possible value of zero.

Further, the invention also provides for a manufacturing method for creating the transverse elements for the drive belt in accordance with the above. In the conventional manufacturing method the transverse elements are shaped by blanking from a strip of base material and are subsequently stone tumbled to abrasively remove any burrs formed at blanking. In the known blanking process step the transverse elements are cut out of a strip of base material by moving a cutter of a blanking press into an element-shaped hole of a die of the blanking press, whereby the strip of base material is placed there between.

In the conventional manufacturing method, ultimately, the amount of rounding-off of the transition surfaces between the side faces and the front and back main surfaces of the transverse elements is predominantly determined by the intensity (e.g. process time, vibration energy, weight of stones and shape or composition of stones) the stone tumbling process determines. A minimum intensity is, however, required to remove the said burrs, which in practice results in the transition surfaces being more or less arc-shaped in cross-section and typically having a radius of curvature of about 0.5 mm.

According to the invention, however, the intensity of the tumbling process may be favourably reduced or possibly even omitted by applying a relatively large play between the die and the cutter of the blanking press over the entire circumference of the transverse element to be shaped thereby. Where conventionally such play amounts to less than 1% of the thickness of the base material, it is presently proposed to apply a play of over 5% up to 20% of such thickness. For a detailed description of the blanking process and the said play applied therein a direct reference is made to the international patent publication W02004/111490, in particular to the figures 4 to 8 thereof and the parts of the description pertaining thereto. Also in EP-A-1158204 a blanking process incorporating a relatively large play is described.

In the above set-up of the blanking process, the burr formed at the circumference of the transverse element will be less pronounced and requires a lower-intensity tumbling process to be removed. Hereby, favourably, the amount of rounding-off of the said transition surfaces may be reduced. By doing so, the radius of curvature between the side faces and the front main face could be reduced to 0.3 mm or even less.

Alternatively, it is suggested to supplement the above-mentioned conventional manufacturing method with a process step, wherein at least the front or the rear transitions between the side faces and, respectively, the front main face or the rear main face of the elements are plastically deformed, i.e. reshaped to form the desired relatively sharp edge, e.g. by applying the coining or other die-pressing operation known from WO2003/069185. A further option is to apply an abrasive operation such as grinding as the supplemental process step. This latter operation is particularly suited to form a radially groove in the side faces of the transverse elements, thereby creating a relatively sharp transition at a location where the side walls of the groove merge with a respective side face.

In both latter cases, the respective transition surface can be made very small such that also their effective radius of curvature will be small and may even approach zero. In a limiting case, a sharp, 90-degree edge is formed between the side face and the further surface such that the transition surface is essentially non-existent.

The invention will now be illustrated further with reference to the accompanying figures.
Figure 1 is a schematic representation in a perspective view of a known continuously variable transmission provided with a drive belt and two pulleys.
Figure 2 provides a front elevation of a transverse element of the known drive belt.
Figure 3 is a cross section of the known transverse element along a plane A-A indicated in figure 2.
Figure 4 is a cross section of the transverse element along a plane A-A indicated in figure 2, however, shaped in accordance with a first example of the present invention.
Figure 5 is a detail of the cross section of the transverse element of figure 4 providing an indication of its frictional contact with a transmission pulley.
Figure 6 is a cross section of the transverse element along a plane A-A indicated in figure 2, however, shaped in accordance with a second example of the present invention.
Figure 7 is a graph illustrating the effect of the present invention on the coefficient of friction between the transverse element and a transmission pulley.
Figure 8 is a cross section of the transverse element along a plane A-A indicated in figure 2, however, shaped in accordance with a third example of the present invention.

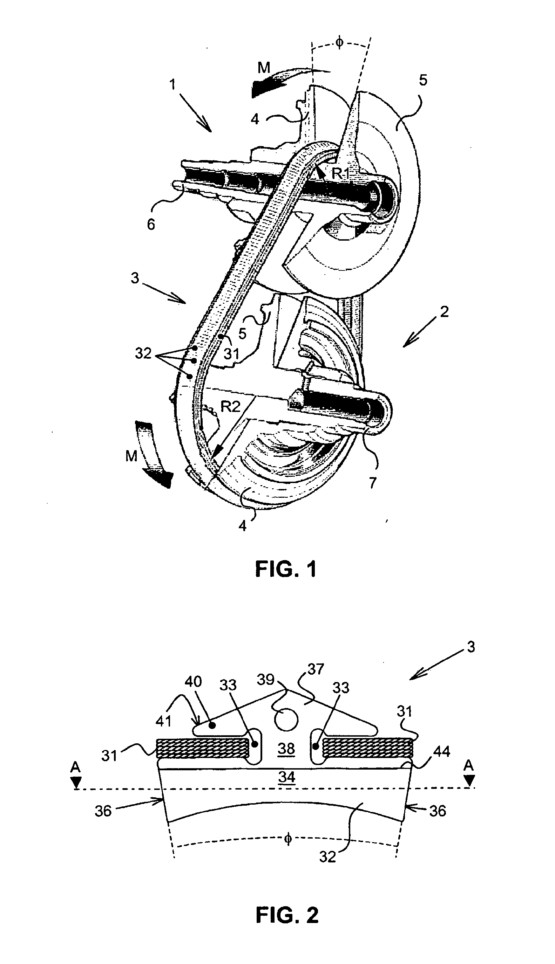

Figure 1 shows the central parts of a known continuously variable transmission that is commonly applied in the drive line of motor vehicles between the engine and the driven wheels thereof. The transmission comprises two pulleys 1, 2, each provided with two pulley discs 4, 5, between which a push-type drive belt 3 is present for transmitting a rotational movement M and an accompanying torque from one pulley 1, 2 to the other 2, 1. The pulley discs 4, 5 are shaped generally conical and at least one pulley disc 4 of each pulley 1, 2 is incorporated in the transmission axially moveable along a pulley shaft 6, 7 of the respective pulley 1, 2. The transmission normally also comprises activation means that impose on the said at least one movable disc 4 an axially oriented clamping force directed towards the respective other pulley disc 5 such that the drive belt 3 is clamped there between.

The drive belt 3 comprises an endless tensile means 31 and a multitude of relatively thin transverse elements 32 that are provided on the tensile means 31 movable along the longitudinal direction thereof and oriented predominantly transversely thereto. The elements 32 take-up the said clamping force, such that at rotation of a driving pulley 1, friction between the discs 4, 5 and the drive belt 3, causes the elements 32 to be thrust in the said direction of movement M from the said driving pulley 1 to a driven pulley 2 and back again, thereby being guided and supported by the tensile means 31. A geometric transmission ratio of the transmission is thereby determined and defined by the quotient of an effective contact radius R2 of the drive belt 3 at the driven pulley 2 and an effective contact radius R1 of the drive belt 3 at the driving pulley 1. Such radii R1, R2 and geometric transmission ratio may vary continuously in a pre-defined range of attainable values.

Figure 2 provides a front elevation of the known transverse element 32 that is incorporated in the drive belt 3 mounted on the endless tensile means 31 thereof, which, in this example, is shown to consist of two laminated parts, each part being formed by a number of thin and flat rings that are nested one around the other in the radial direction and being accommodated in a respective opening 33 of the transverse element 32.

The transverse element 32 comprises a body part 34, which is situated below or - relative to the radial direction- inside the tensile means 31 and which forms a bottom side of the openings 33. A generally arrowhead-shaped head part 37 of the transverse element 32 forms a top side of the openings 33. Situated between the openings 33 is a so-called pillar part 38 of the transverse element 32 that connects the body part 34 and the head part 37 to each other. On either lateral side thereof, the body part 34 is provided with laterally oriented (i.e." facing"), side faces 36 for arriving into a frictional contact with the pulley discs 4, 5. These side faces 36 are mutually diverging in radially outward direction, whereby an angle φ of such divergence, the so-called belt angle φ, is also defined between the discs 4, 5 of the pulleys 1, 2 (see figure 1). It is common practice to provide the side faces 36 with a surface profiling to enhance the tribological properties of the frictional contact with the pulley discs 4, 5.

A projection 39 is provided on a front main face 40 of the transverse element 32 located essentially centrally on the head part 37 thereof, which projection 39 is accommodated in a hole (not visible) provided in a rear main face 41 of an adjacent transverse element 32. The projection 39 and hole are provided to mutually connect and align adjacent transverse elements 32 in the drive belt 3. Hereby, it is remarked that the terms front and rear are defined in relation to the overall direction of movement M of the drive belt 3.

Below a so-called tilting line 44, which is also denoted as tilting zone 44, the body part 34 at least effectively tapers off in radially inward direction, so as to allow the belt 3 to assume a longitudinally curved trajectory at the pulleys 1, 2, in which trajectory the transverse elements 32 mutually tilt about their predominantly axially oriented tilting lines 44 with respect to a respectively adjacent element 32.

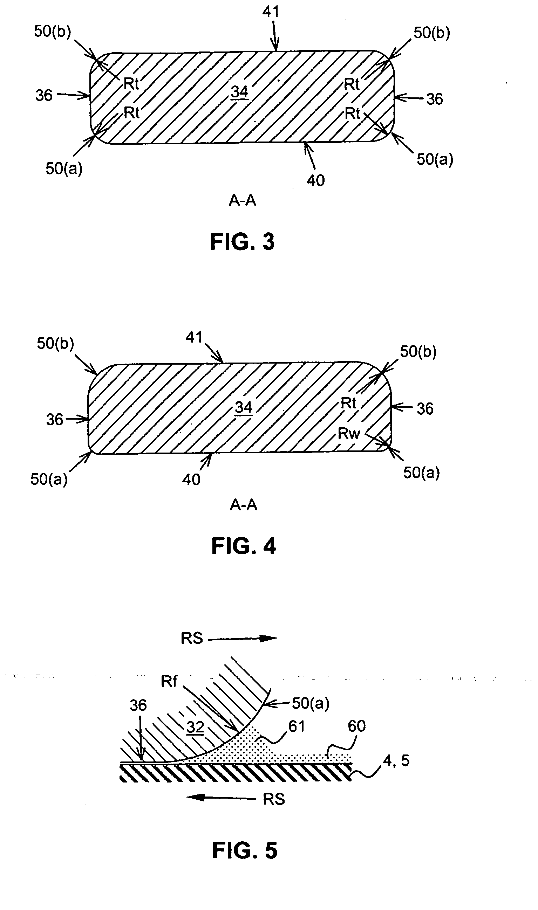

In figure 3 a cross section of the transverse element 32 is provided along the plane A-A in figure 2, i.e. at the location of its body part 34. It is shown here that the element 32 is provided with four transition surfaces 50, i.e. two front transition surfaces 50(a) between each of its two side faces 36 and its front main face 40 and two rear transition surfaces 50(b) between each of the two side faces 36 of the element 32 and its rear main face 410, whereby the terms front and rear are defined in relation to an intended or main direction of movement M of the drive belt 3 when the transmission is in operation.

In the known belt 3 all of these transition surfaces 50 are smoothly rounded and may in cross-section, at least effectively, be described by an arc having a radius of curvature Rt, which radius of curvature Rt is determined in and by the manufacturing process of the transverse elements 32. In particular the manufacturing step of stone tumbling the transverse elements 32 to abrasively remove any burrs formed at blanking. Typically, such conventional radius of curvature Rt amounts to 0.5 mm.

According to the present invention it was found that the coefficient of friction ("CoF") prevailing between the drive belt 3 and the pulleys 1, 2 can be remarkably improved by providing the either one or both of the said front transition surfaces 50(a) and rear transition surfaces 50(b) as a relatively sharp edge, i.e. with significantly reduced dimensions, in particular in terms of the above-mentioned radius of curvature as seen in cross-section.

A first example of the present invention is given in figure 4 in a cross section of a transverse element 32 along a plane A-A as defined in figure 2. In this example only the front transition surfaces 50(a) are shaped as a relatively sharp edge defined in cross-section by a front radius of curvature Rw. The rear transition surfaces 50(b) are of the radius of curvature Rt to illustrate the difference there between. According to the invention the increase in the CoF may be realised by the radius of curvature Rw of the front transition surfaces 50(a) having a value smaller than 0.3 mm and can be improved even further by applying a still sharper edge, e.g. defined by a value of 0.2 mm or less for the latter radius of curvature Rw. In the presumed optimum, but difficult to manufacture embodiment the radius of curvature Rw would approach, or possibly even be equal to, zero.

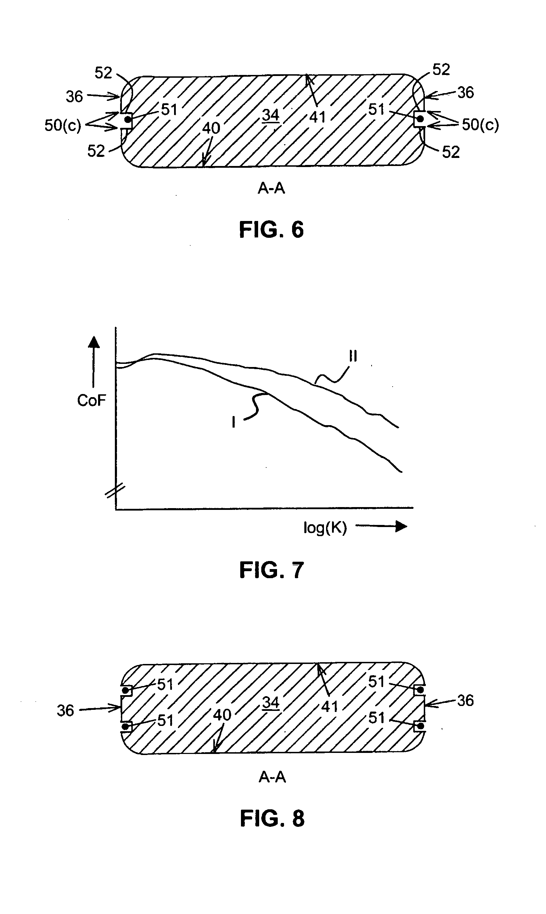

It is believed that as a consequence of the front transition surface 50(a) being shaped as a relatively sharp edge, relatively little lubrication fluid will be forced into the said frictional contact during operation when moving in direction M and so-called boundary lubrication conditions will prevail even at a considerable relative speed between a pulley disc 4, 5 and a transverse element 32 of the belt 3. Such phenomenon and effect thereof are schematically illustrated in figures 5 and 6.

Figure 5 provides a detail of the cross section of the transverse element 32 of figure 4 schematically illustrating the lubricated frictional contact between a side face 36 of the element 32 with a disc 4, 5 of a pulley 1, 2. Because of the relative speed RS between the element 32 and the disc 4, 5 that is mostly present during operation of the transmission, the lubrication fluid that is present in a thin layer 60 on the disc 4, 5 will at least partly be supplied into the said frictional contact, whereby the amount of fluid is a/o determined by the shape of, in this particular case, the front transition surface 50(a). It was found that the amount of fluid in the said frictional contact may be significantly reduced by reducing a so-called wedge-effect that is caused by the more or less wedge-shaped space defined between the transition surface 50(a) of the element 32 and the disc 4, 5, whereby a build-up 61 of lubrication fluid is effected. In accordance with the invention the magnitude of the wedge and thus also of the said wedge-effect may be reduced, by reducing an effective radius Rf of curvature of the transition surface 50(a), possibly up to the point where said radius Rf approaches zero and the side face 36 and the respective main face 40, 41 would effectively merge directly in a sharp edge.

A second example of the present invention is given in figure 6 in a cross section of a transverse element 32 along a plane A-A as defined in figure 2. In this example a radially oriented groove 51 or slit 51 is provided in each of the side faces 36 of the element 32. Hereby, a transition surface 50(c) is formed between at least one of the side walls 52 of the groove 51 and a respective side face 36, which may be easily shaped as a relatively sharp edge in cross-section in accordance with the present invention. In particular with this latter design very good experimental results were obtained in terms of the relative increase in CoF that could be realised therewith. A further advantage of this latter design over the embodiment according to figure 4 is that where the transition surfaces 50(a) and 50(b) between the side faces 36 and its main faces 40 and 41 are prone to wear and thus become less sharp during operation of the belt 3, the transition surfaces 50(c) between the respective side wall 52 of the groove 51 and the side faces 36 will maintain their original shape far better.

In figure 7 the effect of the invention is qualitatively illustrated in a graph wherein a measured CoF is plotted against the logarithm of an index number K representing the relevant transmission operating conditions including the said relative speed RS, a normal force exerted in the said frictional contact, a combined surface roughness of the side faces 36 and the pulley discs 4, 5 and a dynamic viscosity of the lubrication fluid. Curve I in figure 6 represents measurement data obtained with a conventional belt 3, whereas curve II was measured with the transverse elements 32 of figure 6. It can be seen that essentially irrespective of the operating conditions as represented by the index number K, the CoF could be increased with the novel belt design according to the invention.

It is remarked that the groove 51 need not necessarily be provided centrally on the side face 36 as indicated in figure 6. In order to enhance the effect on the CoF obtained thereby, it can also be provided towards an advancing side of the side face 36 as defined in relation to the above-mentioned relative speed RS. However, since such relative speed RS normally changes direction in dependency on the position of the transverse element 32 in the transmission, such centrally provided groove 51 will usually provide a good compromise.

Alternatively, the predominant or otherwise most relevant direction of the relative speed RS can be determined for a specific transmission design, to decide on the location of the groove 51 relative to the width of the side face 36, i.e. either more towards the front main face 40 or towards the rear main face 41. Another option is to provide each side face 36 of the transverse element 32 with two grooves 51, one located near the front main face 40 and one near the rear main face 41, which latter design is shown in the cross-section of figure 8. Further, the groove or grooves 51 may also be oriented at an angle relative to the radial direction such that it slantingly traverses the width of the side face 36, which design comes with the advantageous feature that such oblique groove 51 may be more easily produced than a completely radially oriented groove 51. Of course the requirement of the invention that the said further surface, here formed by the side wall 52 of the groove 51, predominantly faces the longitudinal direction of the belt 3 requires the said angle to have a value in a range from 0 up to 45 degrees.

## Claims

1. Drive belt (3) provided with an endless tensile means (31) and a number of relatively thin transverse elements (32) that are slidably mounted on the tensile means (31), that have a front main face (40) and a rear main face (41), which are mutually separated over a thickness of the element (32) and which are predominantly oriented in the longitudinal direction of the drive belt (3), and that also have two predominantly laterally oriented side faces (36) one provided on each lateral side of the element (32) for arriving into a frictional contact with a pulley (1, 2) of a transmission in which the drive belt (3) is to be applied, whereby each side face (36) merges through a respective transition surface (50; 50(a), 50(b), 50(c)) with a respective further surface (40; 41; 52) that is at least predominantly oriented in the longitudinal direction of the drive belt (3), **characterised in that** as seen in cross-section the respective transition surface (50; 50(a), 50(b), 50(c)) is at least partly approximated by an arc having an effective radius of curvature smaller than 0.3 millimetre.

2. Drive belt (3) according to claim 1, **characterised in that**, the said effective radius of curvature smaller than 0.2 mm.

3. Drive belt (3) according to claim 1 or 2, **characterised in that**, the respective transition surface (50; 50(a), 50(b), 50(c)) is reduced to, at least approximates a sharp edge having an effective radius of curvature approximating zero as seen in cross-section.

4. Drive belt (3) according to any one of the preceding claims, **characterised in that** the respective further surfaces (40; 41; 52) are the main faces (40, 41) of the transverse elements (32).

5. Drive belt (3) according to any one of the preceding claims, **characterised in that** each side face (36) is provided with at least one predominantly radially extending and essentially straight groove (51) and **in that** the respective further surface (40; 41; 52) is a side wall (52) of a respective groove (51).

6. Drive belt (3) according to claim 5, **characterised in that** the groove (51) is substantially radially extending and is provided essentially centrally on the respective side face (36).

7. Drive belt (3) according to claim 5, **characterised in that** each side face (36) is provided with two substantially radially extending grooves (51), one located near the front main face 40 and one near the rear main face 41.

8. Drive belt (3) according to claim 5, **characterised in that**, the groove (51) is oriented at an angle with respect to the radial direction, which angle has a value in the range from 0 up to 45 degrees.

9. Method of manufacturing a transverse element (32) for a drive belt (3) according to one of the preceding claims at least comprising the step of cutting a transverse element (32) out of a strip of base material by moving a cutter into an element-shaped hole of the die while the strip is placed there between, **characterised in that**, after the step of cutting the transverse element (32) a transition surface (50; 50(a), 50(b), 50(c)) thereof between a front main face (40) or a rear main face (41) and a side face (36) of the element (32) in a further process step is reshaped into an edge that is approximated by an arc having an effective radius of curvature smaller than 0.3 mm, preferably smaller than 0.2 mm, more preferably approximating zero.

## Patentansprüche

1. Antriebsriemen (3), der mit einem Endlosspannmittel (31) und einer Anzahl relativ dünner Querelemente (32) versehen ist, die an dem Spannmittel (31) verschiebbar befestigt sind, eine vordere Hauptfläche (40) und eine hintere Hauptfläche (41), die über eine Dicke des Elements (32) voneinander getrennt sind und vorwiegend in der Längsrichtung des Antriebsriemens (3) ausgerichtet sind, aufweisen und auch zwei vorwiegend lateral ausgerichtete Seitenflächen (36) aufweisen, wobei eine auf jeder lateralen Seite des Elements (32) zum Gelangen in Reibkontakt mit einer Riemenscheibe (1, 2) eines Getriebes, in dem der Antriebsriemen (3) Anwendung finden soll, vorgesehen ist, wobei jede Seitenfläche (36) durch eine jeweilige Übergangsfläche (50; 50(a), 50(b), 50(c)) in eine jeweilige weitere Fläche (40; 41; 52), die zumindest vorwiegend in der Längsrichtung des Antriebsriemens (3) ausgerichtet ist, übergeht, **dadurch gekennzeichnet, dass** die jeweilige Übergangsfläche (50; 50(a), 50(b), 50(c)), im Querschnitt betrachtet, zumindest teilweise durch einen Bogen mit einem effektiven Krümmungsradius von weniger als 0,3 Millimetern angenähert wird.

2. Antriebsriemen (3) nach Anspruch 1, **dadurch gekennzeichnet, dass** der effektive Krümmungsradius weniger als 0,2 mm beträgt.

3. Antriebsriemen (3) nach Anspruch 1 oder 2, **dadurch gekennzeichnet, dass** die jeweilige Übergangsfläche (50; 50(a), 50(b), 50(c)) dahingehend reduziert ist, sich einer scharfen Kante mit, im Querschnitt betrachtet, einem effektiven Krümmungsradius von annähernd null zumindest anzunähern.

4. Antriebsriemen (3) nach einem der vorhergehenden Ansprüche, **dadurch gekennzeichnet, dass** die jeweiligen weiteren Flächen (40; 41; 52) die Hauptflächen (40, 41) der Querelemente (32) sind.

5. Antriebsriemen (3) nach einem der vorhergehenden Ansprüche, **dadurch gekennzeichnet, dass** jede Seitenfläche (36) mit mindestens einer sich vorwiegend radial erstreckenden und im Wesentlichen geraden Nut (51) versehen ist und dass die jeweilige weitere Fläche (40; 41; 52) eine Seitenwand (52) einer jeweiligen Nut (51) ist.

6. Antriebsriemen (3) nach Anspruch 5, **dadurch gekennzeichnet, dass** sich die Nut (51) im Wesentlichen radial erstreckt und im Wesentlichen mittig auf der jeweiligen Seitenfläche (36) vorgesehen ist.

7. Antriebsriemen (3) nach Anspruch 5, **dadurch gekennzeichnet, dass** jede Seitenfläche (36) mit zwei sich im Wesentlichen radial erstreckenden Nuten (51) versehen ist, wobei eine in der Nähe der vorderen Hauptfläche (40) angeordnet ist und eine in der Nähe der hinteren Hauptfläche (41) angeordnet ist.

8. Antriebsriemen (3) nach Anspruch 5, **dadurch gekennzeichnet, dass** die Nut (51) in einem Winkel zur radialen Richtung ausgerichtet ist, wobei der Winkel einen Wert im Bereich von 0 bis zu 45 Grad aufweist.

9. Verfahren zur Herstellung eines Querelements (32) für einen Antriebsriemen (3) nach einem der vorhergehenden Ansprüche, das mindestens den Schritt des Schneidens eines Querelements (32) aus einem Streifen Basismaterial durch Bewegen eines Schneidwerkzeugs in ein elementförmiges Loch der Form, während der Streifen dazwischen angeordnet ist, umfasst, **dadurch gekennzeichnet, dass** nach dem Schritt des Schneidens des Querelements (32) eine Übergangsfläche (50; 50(a), 50(b), 50(c)) davon zwischen einer vorderen Hauptfläche (40) oder einer hinteren Hauptfläche (41) und einer Seitenfläche (36) des Elements (32) in einem weiteren Verfahrensschritt in eine Kante umgeformt wird, die durch einen Bogen mit einem effektiven Krümmungsradius von weniger als 0,3 mm, vorzugsweise weniger als 0,2 mm, besonders bevorzugt annähernd null, angenähert wird.

## Revendications

1. Courroie de transmission (3) dotée d'un moyen de tension (31) sans fin et d'un certain nombre d'éléments transversaux (32) relativement minces qui sont montés à coulissement sur le moyen de tension (31), qui comportent une face principale avant (40) et une face principale arrière (41), lesquelles sont séparées l'une de l'autre par l'épaisseur de l'élément (32) et lesquelles sont principalement orientées dans la direction longitudinale de la courroie de transmission (3), et qui comportent également deux faces latérales (36) orientées principalement de manière latérale, une sur chaque côté latéral de l'élément (32), destinées à venir en contact par frottement avec une poulie (1, 2) d'une transmission dans laquelle la courroie de transmission (3) est destinée à être appliquée, chaque face latérale (36) fusionnant par le biais d'une surface de transition respective (50 ; 50(a), 50(b), 50(c)) avec une autre surface respective (40 ; 41 ; 52) qui est au moins principalement orientée dans la direction longitudinale de la courroie de transmission (3), **caractérisée en ce que**, vue en section transversale, la surface de transition respective (50 ; 50(a), 50(b), 50(c)) a au moins partiellement l'aspect approximatif d'un arc présentant un rayon de courbure effectif inférieur à 0,3 millimètre.

2. Courroie de transmission (3) selon la revendication 1, **caractérisée en ce que** ledit rayon de courbure effectif est inférieur à 0,2 mm.

3. Courroie de transmission (3) selon la revendication 1 ou 2, **caractérisée en ce que** la surface de transition respective (50 ; 50(a), 50(b), 50(c)) est réduite de façon à avoir au moins l'aspect approximatif d'une arête vive présentant un rayon de courbure effectif proche de zéro, vue en section transversale.

4. Courroie de transmission (3) selon l'une quelconque des revendications précédentes, **caractérisée en ce que** les autres surfaces respectives (40 ; 41 ; 52) sont les faces principales (40, 41) des éléments transversaux (32).

5. Courroie de transmission (3) selon l'une quelconque des revendications précédentes, **caractérisée en ce que** chaque face latérale (36) est dotée d'au moins une rainure (51) essentiellement droite s'étendant principalement de manière radiale et **en ce que** l'autre surface respective (40 ; 41 ; 52) est une paroi latérale (52) d'une rainure respective (51).

6. Courroie de transmission (3) selon la revendication 5, **caractérisée en ce que** la rainure (51) s'étend sensiblement de manière radiale et est située essentiellement au centre de la face latérale (36) respective.

7. Courroie de transmission (3) selon la revendication 5, **caractérisée en ce que** chaque face latérale (36) est dotée de deux rainures (51) s'étendant sensiblement de manière radiale, une située près de la face principale avant (40) et une près de la face principale arrière (41).

8. Courroie de transmission (3) selon la revendication 5, **caractérisée en ce que** la rainure (51) est orientée à un certain angle par rapport à la direction radiale, ledit angle ayant une valeur dans la plage de 0 à 45 degrés.

9. Procédé de fabrication d'un élément transversal (32) pour une courroie de transmission (3) selon l'une des revendications précédentes comprenant au moins l'étape de découpe d'un élément transversal (32) dans une bande de matériau de base par déplacement d'un dispositif de coupe de façon à l'insérer dans un trou de la matrice présentant la forme de l'élément tandis que la bande est placée entre ceux-ci, **caractérisé en ce que**, après l'étape de découpe de l'élément transversal (32), une surface de transition (50 ; 50(a), 50(b), 50(c)) de celui-ci entre une face principale avant (40) ou une face principale arrière (41) et une face latérale (36) de l'élément (32) est remodelée dans une autre étape de traitement de façon à former une arête ayant l'aspect approximatif d'un arc présentant un rayon de courbure effectif inférieur à 0,3 mm, de préférence inférieur à 0,2 mm, plus préférablement proche de zéro.
